# EUROPÄISCHE PATENTSCHRIFT

(11) **EP 0 723 797 B1**
(45) Veröffentlichungstag und Bekanntmachung des Hinweises auf die Patenterteilung: **11.12.1996**
(21) Anmeldenummer: 94120635.1
(22) Anmeldetag: 24.12.1994
(51) Int. Cl.: B01D 29/54, B01D 29/68

(54) **Rückspülbare Filtereinrichtung**
Back flushable filter device
Dispositif de filtration à nettoyage par contre-courant

(43) Veröffentlichungstag der Anmeldung: 31.07.1996
(73) Patentinhaber: HONEYWELL AG, 63067 Offenbach (DE)
(72) Erfinder: Vollmer, Rudolf, Dipl.-Ing. (FH), D-74821 Mosbach (DE)
(74) Vertreter: Herzbach, Dieter, Dipl.-Ing.

(56) Entgegenhaltungen:
- EP-A- 0 018 527
- DE-U- 7 631 815

## Beschreibung

Die vorliegende Erfindung bezieht sich auf eine rückspülbare Filtereinrichtung nach dem Gattungsbegriff des Patentanspruches 1.

Eine derartige rückspülbare Filtereinrichtung ist aus der EP 0 018 527 B1 bekannt. Diese bekannte Filtereinrichtung weist einen im Normalbetrieb von außen nach innen und im Rückspülbetrieb von innen nach außen durchströmten Filter auf, der aus einem verschiebbaren Hauptfilter und einem ortsfesten Vorfilter besteht. Zwischen einem Einlaß der Filtereinrichtung und dem Hauptfilter ist ein Absperrventil angeordnet, das geschlossen wird, wenn die Rückspülung eingeleitet wird, so daß über das Vorfilter Medium dem Innern des Hauptfilters zugeführt wird. Zur Reinigung des Hauptfilters ist in diesem drehbar eine Sprüh- oder Spritzvorrichtung gelagert, die beim Rückspülbetrieb angetrieben wird. Eine Reinigung des Vorfilters findet bei dieser bekannten Filtereinrichtung nicht statt.

Es ist daher die Aufgabe der vorliegenden Erfindung, die bekannte Filtereinrichtung so weiterzugestalten, daß bei einem vereinfachten Aufbau auch eine Reinigung des Vorfilters möglich ist.

Die Lösung dieser Aufgabe gelingt gemäß den kennzeichnenden Merkmalen des Patentanspruches 1. Weitere vorteilhafte Ausgestaltungen der erfindungsgemäßen Filtereinrichtung sind den abhängigen Ansprüchen entnehmbar.

Anhand eines in den Figuren der beiliegenden Zeichnung dargestellten Ausführungsbeispieles sei im folgenden die Erfindung näher beschrieben. Es zeigen:

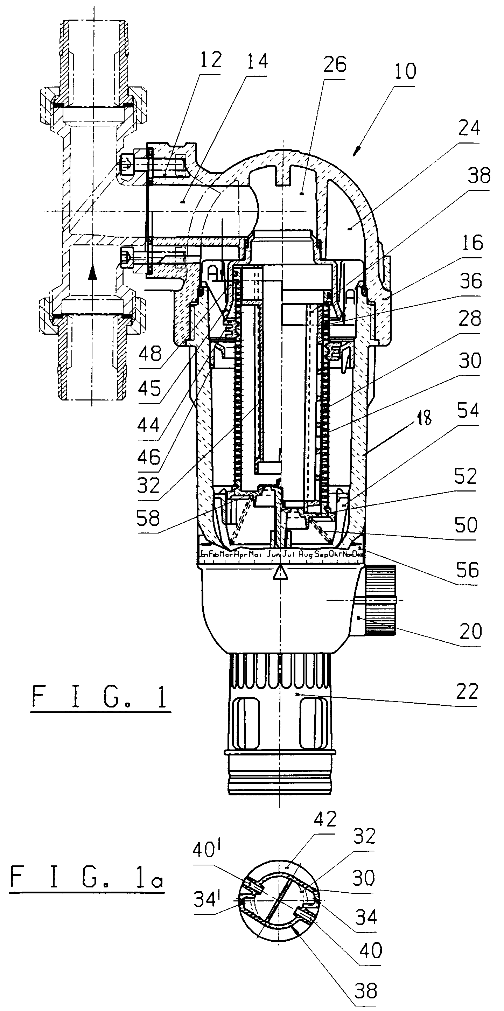

- Fig. 1: einen vertikalen Längsmittelschnitt durch die wesentlichen Teile einer Filtereinrichtung gemäß der Erfindung; und
- Fig. 1a: eine Schnittansicht gemäß der Linie A-A in Fig. 1 durch die erfindungsgemäße Anordnung aus Impeller und Fliehkraftpumpe.

Die rückspülbare Filtereinrichtung 10 besitzt gemäß Fig. 1 einen Einlaß 12 für das ungefilterte Medium, welcher konzentrisch zu einem Auslaß 14 angeordnet ist. Von dem Auslaß 14 wird das gefilterte Medium zu dem oder den nicht gezeigten Verbrauchern geführt. Selbstverständlich können Einlaß 12 und Auslaß 14 auch fluchtend auf einer Achse zu beiden Seiten der Filtereinrichtung 10 angeordnet sein.

Das Gehäuse der Filtereinrichtung besteht im wesentlichen aus einem oberen Gehäuseteil 16 sowie einem unteren Gehäuseteil 18, der ein verschließbares Ablaßventil 20 aufweist, über das das beim Rückspülen gebildete, abzuleitende Schmutzwasser über einen Trichter 22 abgeführt wird. Beide Gehäuseteile 16, 18 sind unter Zwischenfügung einer Dichtung miteinander verschraubt. Durch das obere Gehäuseteil 16 werden ein Vordruckraum 24 sowie ein Hinterdruckraum 26 gebildet. Das untere Gehäuseteil 18 besteht vorzugsweise aus einem durchsichtigen Kunststoff, um das Innere der Filtereinrichtung und insbesondere den Grad der Verschmutzung des Hauptfilters von außen sehen zu können. Das obere Gehäuseteil 16 besteht hingegen aus Metall und insbesondere aus einem nicht-rostenden Metall.

Der Hauptfilter 28 besitzt eine kreiszylindrische Form und in seinem Innern befindet sich eine Sprüh- oder Spritzvorrichtung 30, die nachstehend als Impeller bezeichnet wird. Dieser Impeller 30 besteht im wesentlichen aus einem kreiszylindrischen Grundkörper 32, an dem zwei um 180° am Umfang versetzte Flachdüsen 34, 34' angeformt sind. Die Austrittsschlitze der Flachdüsen können durchgehend verlaufen oder wie dies in der rechten Hälfte von Fig. 1 angedeutet ist, durch Stege unterbrochen sein. Die nähere Ausgestaltung kann der EP 0 018 527 B1 entnommen werden. An den Hauptfilter schließt sich nach oben konzentrisch ein Vorfilter 36 an, wobei beide Filter 28, 36 vorzugsweise einstückig sind und den gleichen Durchmesser aufweisen.

In dem Vorfilter 36 ist eine Fliehkraftpumpe 38 angeordnet, die aus zwei an den hohlzylindrischen Grundkörper 32 angesetzten radial gerichteten Pumpenschaufeln 40, 40' besteht, wobei vorzugsweise zwei um 180° versetzte Pumpenschaufeln angeordnet sind. Die Fliehkraftpumpe 38 ist einstückig mit dem Impeller 30 ausgebildet. Eine Ringscheibe 42 trennt Fliehkraftpumpe 38 und Impeller 30. Die Anordnung, bestehend aus Impeller 30 und Fliehkraftpumpe 38 ist lose innerhalb der Filteranordnung 28, 36 verschiebbar.

An der Filteranordnung 28, 36 ist ein sie umgebender ringförmiger Schließkörper 44 angeordnet, der in der unteren Endstellung mit einem Ventilsitz 46 im Innern des unteren Filtergehäuses 18 zusammenwirkt und in der oberen Endstellung mit dem aufgeweitetem Kragen einer Glocke 48 zusammenwirkt, in der der obere Teil der Filteranordnung geführt ist. Die Glocke 48 ist mit einer definierten Öffnung 45 versehen, um einen Minimaldurchfluß zu gestatten und eine Totwasserzone zu vermeiden.

Die Filteranordnung ist nach unten durch einen Boden 52 verschlossen, der sich über eine Feder 50 an einer Führungstasse 54 abstützt. Die Führungstasse 54 dient einmal mit einer kreisrunden Öffnung der Führung des Filterbodens 52 und zum andern der Abstützung der Feder 50. Über durchbrochene Stege kann in der nach unten verschobenen Stellung des Filters das Medium über das Ablaßventil 20 und den Ablauftrichter 22 abfließen. Im Filterboden 52 ist ein Sieb 58 angeordnet, um im Normalbetrieb der Filtereinrichtung einen Wasseraustausch mit dem darunter befindlichen Raum sicherzustellen.

Das untere Gehäuseteil 18 ist oberhalb des Ablaßventils 20 mit einem Einstellring 56 versehen, der in nicht weiter dargestellter Weise eine Monatsteilung aufweist, die mit einem Pfeil zusammenwirkt, wodurch die Rückspülintervalle angezeigt werden können.

Aus dem vorstehend beschriebenen Aufbau ergibt sich folgende Wirkungsweise:
Im normalen Filterbetrieb nimmt die rückspülbare Filtereinrichtung die in der linken Hälfte von Fig. 1 dargestellte Position ein. Das zu filternde Medium fließt von dem Vordruckraum 24 und durch das geöffnete Absperrventil 44, 46 auf die Außenseite des Hauptfilters 28, um von dort in den Hinterdruckraum 26 und zu dem Auslaß 14 zu gelangen. Der Zutritt des Mediums zu dem Vorfilter 36 ist weitgehend unterbunden, da der Schließkörper 44 an dem abgewinkelten Bund der Glocke 48 anliegt. Ein Minimal-Wasserausstausch ist über die Öffnung 45 möglich.

Beim Öffnen des Ablaßventiles 20 ergibt sich ein Unterdruck unterhalb des Bodens 52 der Filteranordnung, so daß die Filteranordnung 28, 36 gegen die Kraft der Feder 50 nach unten verschoben wird, wobei sie in der Glocke 48 und der Führungstasse 54 geführt ist. Zugleich wird hierbei das Absperrventil 44, 46 geschlossen. Nunmehr tritt das Medium über das Vorfilter 36 ein, wobei die zwischen den Pumpenschaufeln 40, 40' angeordneten Lücken als Ansaugkanäle wirken. Hierbei wird durch den auf die Ringscheibe 42 einwirkenden Druck der Impeller zusammen mit der Fliehkraftpumpe in der Filteranordnung nach unten verschoben. Auf diese Weise wird die Eintrittsfläche an dem Vorfilter 36 vergrößert. Das durch den zylindrischen Grundkörper 32 nach unten fließende Medium treibt den Impeller 30 an, so daß der Hauptfilter 28 gereinigt wird und die von dem Impeller 30 angetriebene Fliehkraftpumpe 38 bewirkt eine Reinigung des Vorfilters 36, indem das Medium entgegen der allgemeinen Fließrichtung durch die Pumpenschaufeln nach außen gedrückt wird.

## Patentansprüche

1. Rückspülbare Filtereinrichtung (10), insbesondere für eine Hauswasseranlage, mit einem im Normalbetrieb von außen nach innen und im Rückspülbetrieb von innen nach außen durchströmten Hauptfilter (28), mit einem zwischen einem Einlaß (12) und dem Hauptfilter (28) angeordneten Absperrventil (44,46), mit einem Vorfilter (36), über das beim Rückspülen dem Innern des Hauptfilters das Medium zugeführt wird, und mit einer in dem Hauptfilter drehbar gelagerten und beim Rückspülen durch die austretende Flüssigkeit angetriebenen Sprüh- oder Spritzvorrichtung (Impeller 30), **dadurch gekennzeichnet,** daß koaxial zu dem Impeller (30) eine in dem Vorfilter (36) rotierende, der Reinigung des Vorfilters dienende Fliehkraftpumpe (38) angeordnet ist.

2. Filtereinrichtung nach Anspruch 1, **dadurch gekennzeichnet,** daß der Hauptfilter (28) und der Vorfilter (36) einstückig und koaxial verschiebbar ausgebildet sind.

3. Filtereinrichtung nach Anspruch 2, **dadurch gekennzeichnet,** daß der Filter (28,36) durch einen ihn ringförmig umgebenden Schließkörper (44) des Absperrventils in Haupt- und Vorfilter aufgeteilt ist.

4. Filtereinrichtung nach Anspruch 2, **dadurch gekennzeichnet,** daß der Impeller (30) und die Fliehkraftpumpe (38) einstückig ausgebildet sind.

5. Filtereinrichtung nach Anspruch 4, **dadurch gekennzeichnet,** daß die aus Impeller (30) und Fliehkraftpumpe (38) bestehende Anordnung axial in dem Filter (28,36) verschiebbar ist, um beim Rückspülen einen vergrößerten Bereich des Vorfilters (36) freizugeben.

6. Filtereinrichtung nach Anspruch 1 oder einem der folgenden Ansprüche, **gekennzeichnet durch** eine den Vorfilter (36) übergreifende Glocke (48), die im Normalbetrieb der Filtereinrichtung zusammen mit dem Schließkörper (44) des Absperrventiles den Vorfilter (36) gegenüber dem Medium abdichtet.

7. Filtereinrichtung nach Anspruch 1, **dadurch gekennzeichnet,** daß die Fliehkraftpumpe (38) aus einem zylindrischen Grundkörper (32) besteht, der gegenüber dem Filter einen verringerten Durchmesser aufweist und der radial gerichtete Pumpenschaufeln (40,40') und dazwischen angeordnete, als Ansaugkanäle wirkende Lücken aufweist.

8. Filtereinrichtung nach Anspruch 7, **dadurch gekennzeichnet,** daß der zylindrische Grundkörper (32) zwischen der Fliehkraftpumpe (38) und dem Impeller (30) eine nach außen vorspringende, gegen das Innere des Filters abdichtende Ringscheibe (42) aufweist, an der im Rückspülbetrieb zwecks Verschiebung der Fliehkraftpumpe und des Impellers eine Druckdifferenz angreift.

9. Filtereinrichtung nach Anspruch 6, **gekennzeichnet durch** eine definierte Öffnung (45) in der Glocke (48).

10. Filtereinrichtung nach Anspruch 2, **dadurch gekennzeichnet,** daß die Filteranordnung (28,36) durch einen Boden (52) abgeschlossen ist, in welchem ein Sieb (58) angeordnet ist.

## Claims

1. Back-flushable filtering device (10), in particular for house water installation comprising a main filter (28), which in its normal operational mode is flown through from the outside to the inside and in its back-flushing operational mode is flown through from the inside to the outside, a shut-off valve (44, 46) arranged between an inlet (12) and the main filter (28), an ante-filter (36), via which at back-flushing the medium is fed to the inside of the main filter and a spray or squirt device (impeller 30), which is rotatably mounted within the main filter and is driven in the back-flushing mode by the emerging fluid, **characterized in that** coaxially to the impeller (30) a centrifugal pump (38) is arranged which is rotating within the ante-filter (36) and is serving to clean the ante-filter.

2. Filtering device according to claim 1, **characterized in that** the main filter (28) and the ante-filter (36) form one piece and are coaxially displaceable.

3. Filtering device according to claim 2, **characterized in that** the filter (28, 36) is divided into the main filter and the ante-filter by means of a closing body (44), which is circularly enclosing the filter.

4. Filtering device according to claim 2, **characterized in that** the impeller (30) and the centrifugal pump (38) form one piece.

5. Filtering device according to claim 4, **characterized in that** the arrangement consisting of the impeller (30) and the centrifugal pump (38) is axially displaceable within the filter device (28, 36) in order to clear an enlarged surface of the ante-filter in the back-flushing mode.

6. Filtering device according to claim 1 or one of the following claims, **characterized by** a jacket (48) surmounting the ante-filter (36) which in the normal operational mode of the filter device under counteracting with the closing body (44) of the shut-off valve is sealing the ante-filter (36) against the medium.

7. Filtering device according to claim 1, **characterized in that** the centrifugal pump (38) consists of a cylindrical basic body (32), which with respect to the filter comprises a reduced diameter and has radially directed pump vanes (40, 40') and gaps in between which are acting as suction channels.

8. Filtering device according to claim 7, **characterized in that** the cylindrical basic body (32) comprises a ring disk (42) between the centrifugal pump (38) and the impeller (30), which ring disk extends outwardly against the inside of the filter and on which a differential pressure is acting in the back-flushing mode in order to displace the centrifugal pump and the impeller.

9. Filtering device according to claim 6, **characterized by** a predefined opening (45) within the jacket (48).

10. Filtering device according to claim 2, **characterized in that** the filter device (28, 36) is closed by a bottom (52) which is provided with a mesh (58).

## Revendications

1. Dispositif de filtration (10) nettoyable par rétrolavage, notamment pour une installation d'alimentation en eau domestique, comportant un filtre principal (28) qui, en fonctionnement normal, est traversé de l'extérieur vers l'intérieur et, en phase de rétrolavage, est traversé de l'intérieur vers l'extérieur, ainsi qu'une soupape d'arrêt (44,46) disposée entre une entrée (12) et le filtre principal (28), un préfiltre (36) au moyen duquel, lors du rétrolavage, le fluide est envoyé à l'intérieur du filtre principal, et un dispositif de pulvérisation ou de projection (rotor 30) monté, de manière à pouvoir tourner, dans le filtre principal et entraîné, lors du rétrolavage, par le liquide sortant caractérisé en ce qu'une pompe centrifuge (38), qui tourne dans le préfiltre (36) et sert à nettoyer le préfiltre, est disposée coaxialement avec le rotor (30).

2. Dispositif de filtration selon la revendication 1, caractérisé en ce que le filtre principal (28) et le préfiltre (36) sont réalisés d'un seul tenant et en étant déplaçables coaxialement.

3. Dispositif de filtration selon la revendication 2, caractérisé en ce que le filtre (28,36) est subdivisé, par un corps de fermeture (44), qui l'entoure annulairement, de la soupape d'arrêt, en le filtre principal et le préfiltre.

4. Dispositif de filtration selon la revendication 2, caractérisé en ce que le rotor (30) et la pompe centrifuge (38) sont réalisés d'un seul tenant.

5. Dispositif de filtration selon la revendication 4, caractérisé en ce que l'ensemble constitué par le rotor (30) et la pompe centrifuge (38) est déplaçable axialement dans le filtre (28,36), de manière à découvrir, lors du rétrolavage, une zone agrandie du préfiltre (36).

6. Dispositif de filtration selon la revendication 1 ou l'une des revendications suivantes, caractérisé par une cloche (48), qui s'engage par-dessus le préfiltre (36) et qui, conjointement avec le corps de fermeture (44) de la soupape d'arrêt, isole de façon étanche le préfiltre (36) vis-à-vis du fluide, pendant le fonctionnement normal du dispositif de filtration.

7. Dispositif de filtration selon la revendication 1, caractérisé en ce que la pompe centrifuge (38) est constituée par un corps de base cylindrique (32), qui possède un diamètre réduit par rapport au filtre et qui comporte des ailettes (40,40') dirigées radialement et des vides situés entre les ailettes et agissant comme des canaux d'aspiration.

8. Dispositif de filtration selon la revendication 7, caractérisé en ce que le corps de base cylindrique (32) comporte, entre la pompe centrifuge (38) et le rotor (30), un disque annulaire (42), qui fait saillie vers l'extérieur et réalise une étanchéité par rapport à l'intérieur du filtre et auquel une différence de pression est appliquée en phase de rétrolavage pour permettre le déplacement de la pompe centrifuge et du rotor.

9. Dispositif de filtration selon la revendication 6, caractérisé par une ouverture définie (45) ménagée dans la cloche (48).

10. Dispositif de filtration selon la revendication 2, caractérisé en ce que l'ensemble formé par les filtres (28,36) est fermé par un fond (52), dans lequel est disposé un tamis (58).
